# FASCICULE DE BREVET EUROPEEN

(11) **EP 0 373 021 B1**
(45) Date de publication et mention de la délivrance du brevet: **17.03.1993**
(21) Numéro de dépôt: 89403187.1
(22) Date de dépôt: 20.11.1989
(51) Int. Cl.: H02G 3/04

(54) **Procédé de fabrication d'une structure légère pour supporter des éléments longilignes, moyens en vue de la mise en oeuvre de ce procédé et structure ainsi obtenue**
Verfahren zur Herstellung einer Leichtbauanordnung zum Tragen von langgestreckten Elementen, Mittel zur Ausführung dieses Verfahrens und durch dieses Verfahren erhaltene Anordnung
Procedure of the fabrication of a light-construction device to support longish elements, means provided for the realisation of this procedure and device obtained thereby

(30) Priorité: 01.12.1988 FR 8816488
(43) Date de publication de la demande: 13.06.1990
(73) Titulaire: TOLARTOIS S.A., F-62404 Bethune Cedex (FR)
(72) Inventeur: Tarnus, André, F-62131 Verquin (FR)
(74) Mandataire: Ecrepont, Robert

(56) Documents cités:
- EP-A- 0 119 670
- DE-B- 1 225 726
- FR-A- 2 478 891
- FR-A- 2 588 426
- US-A- 4 080 742

## Description

L'invention se rapporte à un procédé de fabrication d'une structure légère pour supporter des éléments longilignes tels des cables ou canalisations ainsi qu'aux moyens en vue de la mise en oeuvre de ce procédé et à la structure ainsi obtenue.

A ce jour, pour supporter de tels éléments, il est connu d'utiliser des chemins de cables comprenant généralement une succession d'éléments profilés en U.

Initialement, les éléments ainsi profilés étaient obtenus soit par pliage de feuilles de tôle pleine ou ajourée (EP-A-57879), soit par pliage de treillis de fils soudés entre eux (EP-A-191667).

Par la suite, pour des installations légères, au lieu d'éléments du type précité, sont apparus des éléments en U qui, à la manière d'échelle, sont chacun constitués de deux longerons qui ne seront reliés entre eux que, de place en place, par des traverses, ce qui, notamment, permet une meilleure ventilation des cables et/ou canalisations et un meilleur accès pour leur mise en place et leur fixation.

Généralement, même lorsque les extrémités des traverses sont engagées dans des gorges présentées par les longerons, telles que conçues, les dites traverses de ces échelles nécessitent d'être assemblées aux longerons par rivetage, vissage ou boulonnage (FR-A-2.588.426) ce qui demande un temps de montage important et oblige à disposersur le lieu du montage de ces rivets, vis ou boulons dont au cours des opérations un bon nombre tombe et se perd.

Il est également connu d'assembler les traverses aux longerons au moyen de coins mais, bien entendu, ceux-ci constituent également des pièces séparées de petites dimensions qui, lors du montage, se perdent en quantité importante et grèvent ainsi le prix de revient (FR-A-2.510.682).

Pour y remédier, il est connu de prévoir des longerons ayant une section en C et présentant sur l'une de leurs branches une nervure qui sera coiffée par des fentes et/ou découpes réalisées dans les traverses qui, ensuite, sont assemblées par engagement dans un simple orifice jusqu'à encliquetage (EP-A-1 19670) ou par déformation des extrémités des échelons ayant traversé des découpes des longerons (FR-A-2.226.606 et 2.478.891

Ces procédés de fabrication ne permettent pas de parvenir à une échelle suffisamment rigide pour lui permettre de résister aux contraintes qu'elle reçoit et, de ce fait, l'ensemble peut notamment se voiler ou se déformer autrement dans son plan et ainsi tolérer un déplacement de la nappe de cables et/ou canalisations pouvant alors créer des déconnexions ou des court-circuits.

Même si ces procédés de fabrication pouvaient convenir pour l'assemblage de traverses et longerons en profilés métalliques, il serait toutefois difficile de les appliquer à des traverses et longerons en matière plastique et notamment à des profilés obtenus parex- trusion, "pultrusion" etc ...

Pour assembler les éléments profilés en U entre eux afin de constituer la structure légère complète, il est classique de faire appel à des accessoires communément dénommés éclisses.

Celles-ci sont généralement conformées de manière à assurer le raccordement des éléments profilés en U soit dans le prolongement l'un de l'autre, soit selon un angle caractéristique dans un plan vertical et/ou horizontal.

Il est également connu de réaliser des éclisses en deux parties articulées entre elles autour d'un axe soit parallèle à leur plan, soit perpendiculaire à leur plan.

Dans toutes les réalisations connues, ces éclisses sont fixées aux longerons par boulonnage ou rivetage ce qui, à nouveau, complique le montage car exige d'assurer le maintien en bonne place des différents éléments jusqu'à engagement et serrage des moyens de fixation.

De plus, les dits moyens de fixation risquent, eux aussi, de s'égarer.

Un des résultats que l'invention vise à obtenir est un procédé de fabrication qui, tout en assurant la rigidité de la liaison, permette d'assurer le montage des traverses sur les longerons sans faire appel à des pièces séparées.

A cet effet, elle a notamment pour objet un procédé de fabrication d'éléments de chemins de cables dont les longerons présentent, ouverte sur leurs faces en vis à vis, une gorge longitudinale recevant les extrémités des traverses, laquelle gorge présente une section en U dont les branches portent avantageusement sur leurs faces en vis à vis des nervures s'engageant dans des rainures présentées par la traverse perpendiculairement à l'axe longitudinal de cette traverse et à une distance de la face extrême de la dite traverse au plus égale à la profondeur de la gorge mesurée depuis le fond de la gorge jusqu'à la nervure.

Ce procédé est notamment caractérisé en ce que :
- on se munit de longerons dont les nervures délimitent une ouverture longitudinale qui a une largeur variable selon qu'on la mesure dans une des trois zones décalées longitudinalement comme suit :
   . dans les zones où, après montage, les traverses doivent être positionnées après montage et, de ce fait, dite zone de montage, la dite ouverture a une largeur au plus égale à l'écartement entre les fonds des rainures présentées par les extrémités des traverses,
   . dans une zone dite de blocage, immédiatement adjacente à l'un des côtés de la zone de montage, la dite ouverture a une largeur nettement inférieure à l'écartement entre les fonds des rainures précitées de sorte que les limites entre les deux zones constituent des faces de butée pour le chant de la traverse et,
   . dans la zone dite d'engagement, adjacente à l'autre côté de la zone de montage qui s'étend sur une longueur supérieure à a largeur de la traverse et qui est elle-même scindée en deux zones dont une zone extrême s'étendant sur une largeur au moins égale à la longueur de la traverse et une zone intermédiaire, l'ouverture de la gorge a, dans la zone extrême, une largeur au moins égale à la hauteur de l'extrémité de la traverse et dans la zone intermédiaire une largeur qui, de préférence, décroit progressivement de la largeur de l'ouverture dans la zone extrême à la largeur de l'ouverture dans la zone de montage,
- au montage, par un déplacement parallèle à l'axe de la traverse, on engage l'extrémité de la traverse dans l'ouverture de la zone extrême puis on pousse la traverse parallèlement à l'axe du longeron jusqu'à pincement entre les bords de l'ouverture dans la zone de montage et butée sur les faces prévues à cet effet.

Elle a également pour objet les moyens en vue de la mise en oeuvre de ce procédé et les structures légères pourvues de ces moyens conformément aux revendications 4 et 10.

L'invention sera bien comprise à l'aide de la description ci-après faite à titre d'exemple non limitatif en regard du dessin ci-annexé qui représente schématiquement :

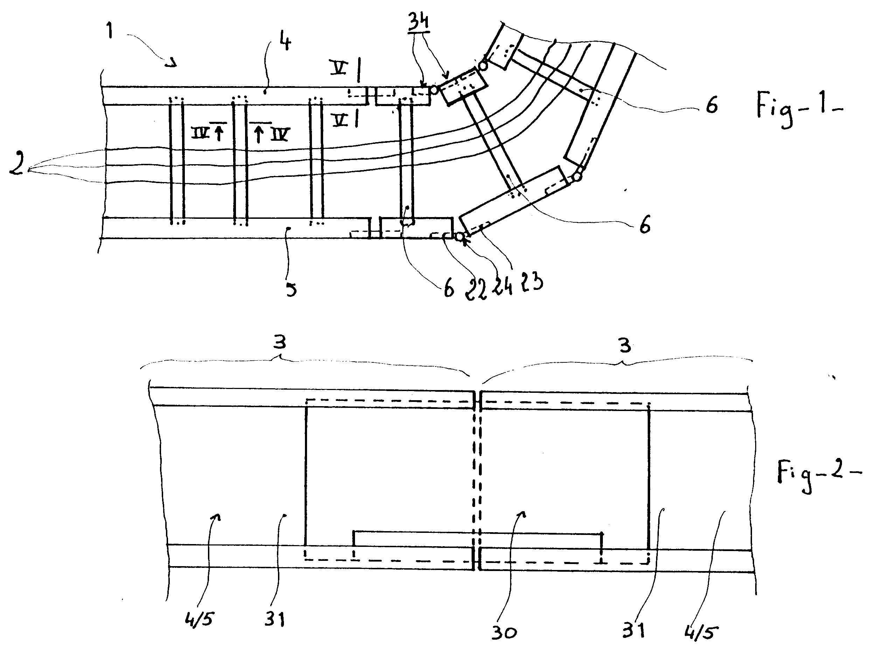

- figure 1 : la structure légère vue de dessus,
- figure 2 : en vue partielle et à plus grande échelle, deux extrémités de longerons assemblés par une éclisse,
- figure 3 : une vue en perspective montrant le montage des traverses dans un longeron,
- figure 4 : une coupe selon IV IV de la figure 1,
- figure 5 : une coupe selon V-V de la figure 1,

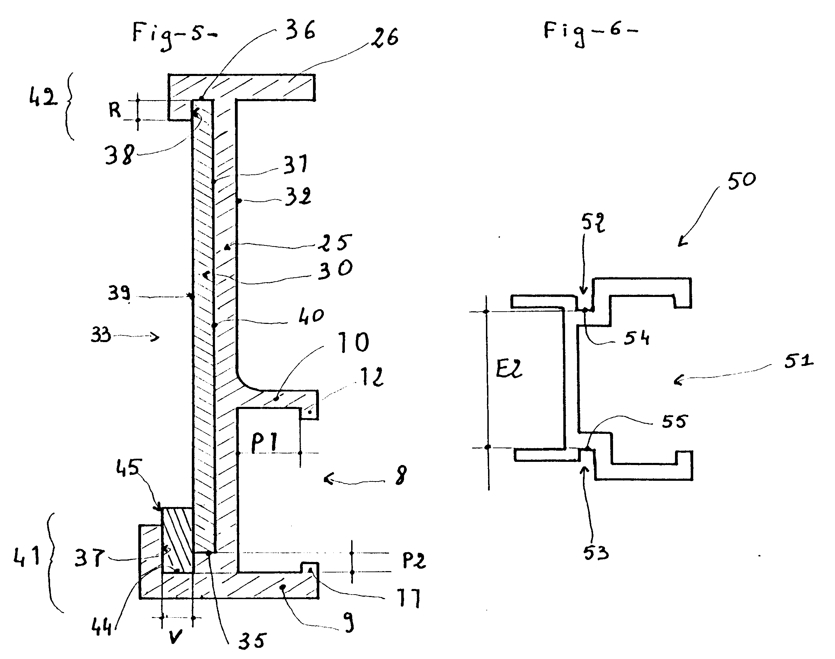

- figure 6 : un organe de raccordement vu de profil,

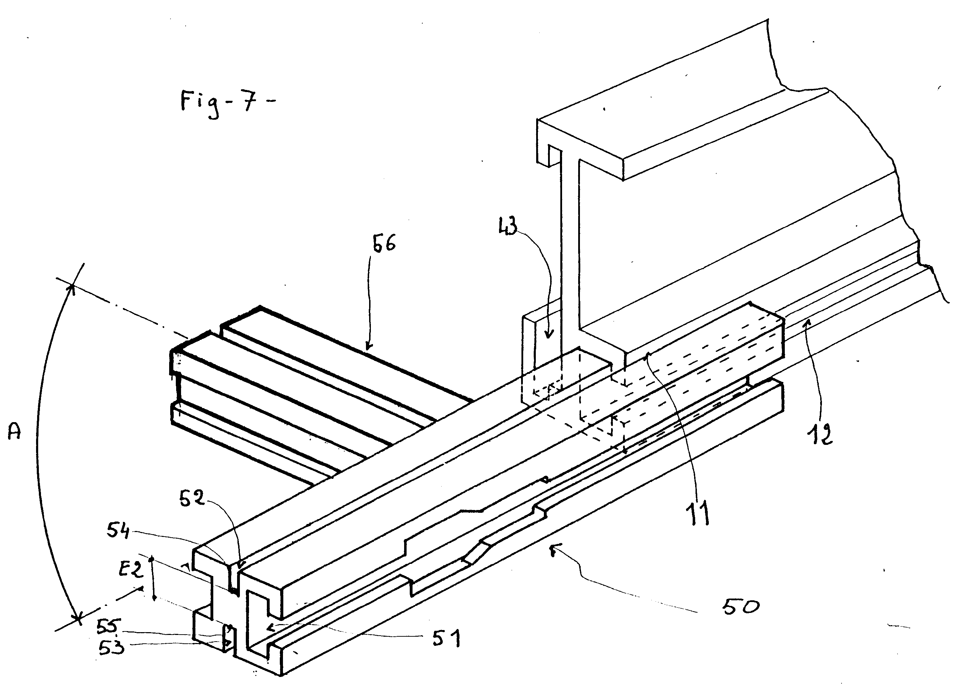

- figure 7 : vu en perspective, un organe de raccordement bidirectionnel.

En se reportant au dessin, on voit que la structure légère 1 destinée à supporter des éléments longilignes 2 est constituée par assemblage d'éléments en U 3 constitués chacun, à la manière d'échelle, de deux longerons 4, 5 qui ne sont reliés entre eux que, de place en place, par des traverses 6.

Ces longerons et traverses sont avantageusement constitués par des profilés qui, de préférence mais non exclusivement, sont réalisés en matière plastique ou matériau composite, par exemple, obtenus par extrusion, "pultrusion", etc ...

De manière connue, les traverses ont de préférence une section tubulaire ouverte leur conférant une certaine légèreté et élasticité.

L'ouverture 7 peut se situer du côté tourné vers l'intérieur de l'élément en U afin, par exemple de recevoir les éléments d'ancrage des moyens de bridage des câbles et canalisations (non représentés) mais, de préférence, elle sera située du côté opposé de la dite traverse.

De manière connue, les longerons présentent, ouverte sur leurs faces en vis à vis, une gorge longitudinale 8 recevant les extrémités des traverses.

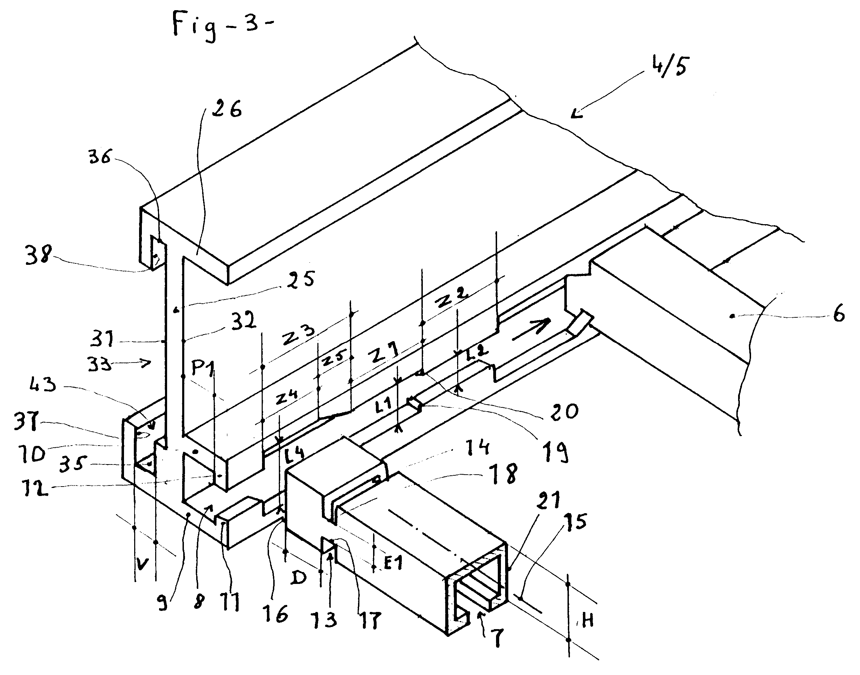

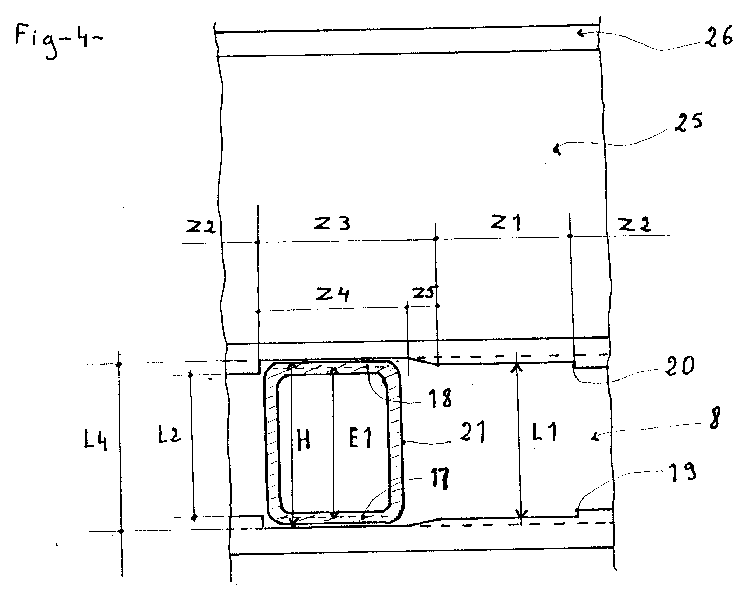

Cette gorge 8 présente (figures 3 à 5) une section en U dont les branches 9, 10 portent avantageusement sur leurs faces en vis à vis des nervures 11 , 12 s'engageant dans des rainures 13, 14 présentées par la traverse perpendiculairement à l'axe 15 longitudinal de cette traverse et à une distance D de la face extrême 16 de la dite traverse au plus égale à la profondeur P₁ de la gorge mesurée depuis le fond de la gorge 8 jusqu'à la nervure 11 ou 12.

Au lieu de se munir de longerons dont l'ouverture de la gorge longitudinale 8, présentée par les longerons, est de largeur constante, et d'y engager l'extrémité des traverses depuis l'une de leurs extrémités ou par déformation de la gorge, de manière caractéristique :
- on se munit de longerons dont les nervures 11, 12 délimitent une ouverture qui a une largeur variable selon qu'on la mesure dans une des trois zones décalées longitudinalement comme suit :
   . dans les zones Z₁ où, après montage, les traverses doivent être positionnées et, de ce fait, dite zone de montage, la dite ouverture a une largeur L₁ au plus égale à l'écartement E₁ entre les fonds 17, 18 des rainures 13, 14 présentées par les extrémités des traverses 6,
   . dans une zone Z₂, dite de blocage, immédiatement adjacente à l'un des côtés de la zone Z₁ de montage, la dite ouverture a une largeur nettement inférieure à l'écartement E₁ entre les fonds 17, 18 des rainures 13, 14 précitées de sorte que les limites entre les deux zones constituent des faces 19, 20 de butée pour le chant 21 de la traverse et,
   . dans la zone Z₃, dite d'engagement, adjacente à l'autre côté de la zone de montage Z₁ qui s'étend sur une longueur supérieure à la largeur de la traverse et qui est elle-même scindée en deux zones dont une zone extrême Z₄, s'étendant sur une longueur au moins égale à la largeur de la traverse et une zone intermédiaire Z₅, l'ouverture de la gorge a une largeur L₄ au moins égale à la hauteur H de l'extrémité de la traverse et dans la zone intermédiaire Z₅ une largeur qui, de préférence, décroit progressivement de la largeur L₄ de l'ouverture dans la zone extréme Z₄ précitée à la largeur L₁ de l'ouverture dans la zone de montage Z₁,
- au montage, par un déplacement parallèle à l'axe 15 de la traverse, on engage l'extrémité de la traverse dans l'ouverture de la zone extrême Z₄ puis on pousse la traverse parallèlement à l'axe du longeron jusqu'à pincement entre les bords de l'ouverture dans la zone de montage Z₁ et butée sur les faces 19, 20 prévues à cette effet.

Grâce à ce procédé de montage, il est superflu de prévoir d'autres moyens de fixation tels que vissage, boulonnage etc ...

Bien entendu, notamment dans le cas où les profilés et longerons seront réalisés en matière plastique et qu'un démontage ultérieur n'est pas à envisager, un collage des faces en contact pourra, dans certains cas, être prévu.

Dans les moyens en vue de la mise en oeuvre de l'invention qui comprennent notamment les longerons et traverses précitées, au lieu que l'ouverture de la gorge longitudinale présentée par les longerons soit de largeur constante et permettre de loger la traverse en un point quelconque de cette longueur, cette ouverture a une largeur variable selon qu'on la mesure dans une des trois zones décalées longitudinalement qui varie comme suit:
- dans les zones Z₁ où, après montage, les traverses doivent être positionnées et, de ce fait dite zone de montage, la dite ouverture à une largeur L₁ au plus égale à l'écartement E₁ entre les fonds 17, 18 des rainures 13, 14 présentées par les extrémités des traverses 6,
- dans une zone Z₂ dite de blocage, immédiatement adjacente à l'un des côtés de la zone Z₁ de montage, la dite ouverture a une largeur nettement inférieure à l'écartement E₁ entre les fonds 17,18 des rainures 13, 14 précitées de sorte que les limites entre les deux zones constituent des faces 19, 20 de butée pour le chant 21 de la traverse tandis qu'à
- dans la zone Z₃, dite d'engagement, adjacente à l'autre côté de la zone de montage Z₁ qui s'étend sur une longueur supérieure à la largeur de la traverse et qui est elle-même scindée en deux zones dont une zone extrême Z₄, s'étendant sur une longueur au moins égale à la largeur de la traverse et une zone intermédiaire Z₅, l'ouverture de la gorge a une largeur L₄ au moins égale à la hauteur H de l'extrémité de la traverse et dans la zone intermédiaire Z₅ une largeur qui, de préférence, décroit progressivement de la largeur L₄ de l'ouverture dans la zone extrême Z₄ précitée à la largeur L₁ de l'ouverture dans la zone de montage Z₁.

Par exemple, pour une traverse d'environ quarante millimètres de haut, l'épaisseur E₁ entre les fonds 17, 18 des rainures 13, 14 des traverses sera de l'ordre de trente sept millimètres, tandis que la gorge présentée par le longeron aura, derrière les nervures 11,12, une largeur d'environ quarante et un millimètres et l'ouverture délimitée par les bords des nervures 11, 12 sera de trente sept millimètres dans la zone de montage, de trente quatre millimètres dans la zone de blocage Z₂ et de quarante et un millimètres dans la zone d'engagement Z₄.

Afin de réaliser les côtés de la goulotte en U, les longerons se prolongent au dessus de la gorge longeant les extrémités des traverses par une nervure ou "âme" 25 conférant, en outre, aux longerons une très grande résistance à la flexion.

Au long de sa rive supérieure, elle pourra, dans le même but, porter une aile horizontale 26, cette aile 26 et la branche inférieure 9 délimitant un côté de la gorge 8, pourront abriter une armature par exemple en fibres de verre.

De manière classique, les éléments d'échelle sont, par leurs longerons, reliés entre eux au moyen d'éclisses 30, et cen qu'il s'agisse d'éclisses planes, droites ou profilées en équerre, ou d'éclisses en deux parties 22, 23 pouvant s'articuler autour d'un axe 24 perpendiculaire ou parallèle à leur plan.

Au lieu que ces éclisses 30 soient fixées aux extrémités de longerons par boulonnage ou rivetage, selon une caractéristique essentielle du procédé de l'invention :
- on se munit de longerons dont la face 31 opposée à celle 32 jouxtant les extrémités des traverses présente une large gorge en Té 33 ouverte latéralement et guidant en translation les extrémités 34 des éclisses 30, laquelle gorge en Té présente ainsi, notamment, deux faces en vis à vis 35, 36 dont l'écartement correspond à la hauteur de l'éclisse et des faces 37, 38 destinées à s'appuyer, au moins indirectement, contre la face 39 de l'éclisse opposée à celle 40 en appui contre la face externe 31 de la nervure ou "âme" 25 du longeron,
- on engage l'éclisse dans la gorge en Té et on fixe l'éclisse sur la dite face 31 de l'âme du longeron.

De préférence, la fixation s'opère par collage.

Selon une caractéristique du procédé de l'invention :
- on se munit de longerons qui, sur au moins l'un 41 des côtés 41, 42 de la gorge en Té à sa face 37 destinée à appuyer sur l'un des bords de la face 39 de l'éclisse qui est écartée de cette face 39 d'une certaine valeur V de manière à réaliser, entre la dite face et le bord de l'éclisse, une gorge longitudinale 43 sensiblement en U ouverte vers la partie axiale du longeron et dont le fond 44 est lui-même écarté de la face 35 qui, dans la gorge en Té, reçoit le chant de l'éclisse d'une certaine profondeur P₂ de préférence au moins égal au recouvrement R de l'autre bord de la face 39 de l'éclisse par le côté opposé 42 de la gorge en Té puis,
- au montage, dans la gorge en U 43 ainsi créée, on engage à force une câle allongée 45 d'épaisseur au moins égale à la largeur de la gorge en U 43 par laquelle câle 45 on maintient la dite éclisse par pincement.

Ce pincement permet notamment de maintenir l'extrémité de l'éclisse en appui contre l'âme du longeron, au moins jusqu'à prise du collage, de préférence.

Compte tenu de la profondeur de la gorge en U 43, l'éclisse peut être engagée latéralement sans qu'il soit nécessaire de l'enfiler par l'extrémité du longeron, ce qui est important dans les cas de montage dans des zones d'accès difficiles ou encombrées.

Les moyens en vue de la mise en oeuvre de l'invention qui comprennent donc les éléments d'échelle et les éclisses 30 précitées sont donc caractérisées en ce que la face 31 opposée à celle 32 jouxtant les extrémités des traverses présente une large gorge en Té 33 ouverte latéralement et guidant en translation les extrémités 34 des éclisses 30.

Les gorges en Té présentent notamment, deux faces en vis à vis 35, 36 dont l'écartement correspond à la hauteur de l'éclisse et des faces 37, 38 destinées à s'appuyer, au moins indirectement, contre la face 39 de l'éclisse opposée à celle 40 en appui contre la nervure ou "âme" 25 du longeron.

Afin de maintenir l'extrémité de l'éclisse en appui contre l'âme du longeron, au moins jusqu'à prise du collage, de préférence, sur au moins l'un 41 des côtés 41, 42 de la gorge en Té, la face 37 destinée à appuyer sur l'un des bords de la face 39 de l'éclisse est écartée de cette face 39 d'une certaine valeur V de manière à réaliser, entre la dite face et le bord de l'éclisse, une gorge longitudinale 43 sensiblement en U ouverte vers la partie axiale du longeron et dont le fond 44 est lui-même écarté de la face 35 qui, dans la gorge en Té, reçoit le chant de l'éclisse d'une certaine profondeur P₂ de préférence au moins égal au recouvrement R de l'autre bord de la face 39 de l'éclisse par le côté opposé 42 de la gorge en Té.

Dans le cas d'éclisses articulées, afin, au montage, de toujours disposer de parties 22, 23 d'éclisses parfaitement appariées, de préférence, les parties coopérantes des éclisses seront fabriquées d'une seule pièce qui seront rescindées avant montage par sciage ou cassure au droit d'une amorce de rupture.

Par exemple, les éclisses 30 seront fabriquées sous la forme d'un plat qui, dans sa partie médiane, présentera une amorce de rupture en deux parties 22, 23 portant chacune sur l'un de leurs bords une fraction des éléments d'articulation 24 tels l'un un charnon ouvert et l'autre un jonc de section complémentaire au logement du charnon.

Toujours dans le cas d'éclisses articulées, de préférence, après installation, l'articulation sera bloquée dans l'angle de montage par tout moyen connu tel que collage et/ou goupillage.

En vue de permettre des raccordements dans plus de deux directions, les moyens en vue de la mise en oeuvre du procédé de l'invention comprennent, en outre, des organes de raccordement 50 qui, sur l'une de leurs faces, présentent une gorge 51 en tous points semblable à celle 8 présentée par les longerons afin comme elle de pouvoir recevoir les extrémités des traverses et qui, sur leur face opposée, présentent des formes aptes à s'engager et à coulisser longitudinalement dans la dite gorge 8 présentée par les longerons pour porter les dites traverses.

De ce fait, l'organe de raccordement 50 présentera également des rainures 52, 53 logeant les nervures 11, 12 de la gorge 8 du longeron mais dont l'écartement E₂ entre les fonds 54, 55 de ces rainures sera au plus égal à la largeur L₂ de l'ouverture de la gorge 8 dans la zone de blocage 22 du longeron.

Sur cet organe de raccordement 50, sera raccordé, par tout moyen connu, selon un angle A correspondant à l'angle sous lequel doit se raccorder un autre longeron, au moins un organe de raccordement 56 semblable au précédent 50 qui sera engagé dans la gorge du longeron à raccorder.

Entre les extrémités des longerons ainsi raccordés angulairement, pourront être ajoutées des éclisses évitant toute solution de continuité dans les côtés du chemin de cable.

## Revendications

1. Procédé de fabrication d'une structure légère pour supporter des éléments longilignes tels des cables ou canalisations, laquelle structure est constituée par assemblage d'éléments en U (3) constitués chacun, à la manière d'échelle, de deux longerons (4, 5) qui ne sont reliés entre eux que, de place en place, par des traverses (6),
lesquels longerons et traverses sont avantageusement constitués par des profilés qui, de préférence mais non exclusivement, sont réalisés en matière plastique, par exemple, obtenus par extrusion, "pultrusion", etc ...
lesquels longerons présentent, ouverte sur leurs faces en vis à vis, une gorge longitudinale (8) qui présente une section en U dont les branches (9, 10) portent avantageusement sur leurs faces en vis à vis des nervures (11, 12)
lesquelles traverses présentent perpendiculairement à leur axe longitudinal (15) et à une certaine distance (D) de la face extrême (16) de la dite traverse des rainures (13, 14) recevant chacune une partie d'une nervure du longeron correspondant,
ce procédé étant CARACTERISE en ce que :
- on se munit de longerons dont les nervures (11,12) délimitent une ouverture longitudinale qui a une largeur variable selon qu'on la mesure dans une des zones décalées longitudinalement comme suit :
. dans les zones (Zᵢ) où, après montage, les traverses doivent être positionnées et, de ce fait, dite zone de montage, la dite ouverture a une largeur (Lᵢ) au plus égale à l'écartement (Eᵢ) entre les fonds (17, 18) des rainures (13, 14) présentées par les extrémités des traverses (6),
. dans une zone (Z₂), dite de blocage, immédiatement adjacente à l'un des côtés de la zone (Zᵢ) de montage, la dite ouverture à une largeur nettement inférieure à l'écartement (Eᵢ) entre les fonds (17,18) des rainures (13, 14) précitées de sorte que les limites entre les deux zones constituent des faces (19, 20) de butée pour le chant (21) de la traverse et,
. dans la zone (Z₃), dite d'engagement, adjacente à l'autre côté de la zone de montage (Zᵢ) qui s'étend sur une longueur supérieure à la largeur de la traverse et qui est elle-même scindée en deux zones dont une zone extrême (Z₄), s'étendant sur une longueur au moins égale à la largeur de la traverse et une zone internmédiaire, l'ouverture de la gorge a, dans la zone extrême, une largeur (L₄) au moins égale à la hauteur (H) de l'extrémité de la traverse et dans la zone intermédiaire (Z₅) une largeur qui, de préférence, décroit progressivement de la largeur (L₄) de l'ouverture dans la zone extrême (Z₄) précitée à la largeur (Lᵢ) de l'ouverture dans la zone de manière (Z₁),
- au montage, par un déplacement parallèle à l'axe (15) de la traverse, on engage l'extrémité de la traverse dans l'ouverture de la zone extrême (Z₄) puis on pousse la traverse parallèlement à l'axe du longeron jusqu'à pincement entre les bords de l'ouverture dans la zone de montage (Zᵢ) et butée sur les faces (19, 20) prévues à cet effet.

2. Procédé selon la revendication 1 caractérisé en ce que
- on se munit de longerons dont la face (31) opposée à celle (32) jouxtant les extrémités des traverses présente une large gorge en Té (33) ouverte latéralement et guidant en translation les extrémités (34) des éclisses (30), laquelle gorge en Té présente ainsi, notamment, deux faces en vis à vis (35, 36) dont l'écartement correspond à la hauteur de l'éclisse et des faces (37, 38) destinées à s'appuyer, au moins indirectement, contre la face (39) de l'éclisse opposée à celle (40) en appui contre la face externe (31) de la nervure ou "âme" (25) du longeron,
- on engage l'éclisse dans la gorge en Té et on fixe l'éclisse sur la dite face (31) de l'âme du longeron.

3. Procédé selon la revendication 2 caractérisé en ce que:
- on se munit de longerons qui, sur au moins l'un (41) des côtés (41, 42) de la gorge en Té à sa face (37) destinée à appuyer sur l'un des bords de la face (39) de l'éclisse qui est écartée de cette face (39) d'une certaine valeur V de manière à réaliser, entre la dite face et le bord de l'éclisse, une gorge longitudinale (43) sensiblement en U ouverte vers la partie axiale du longeron et dont le fond (44) est lui-même écarté de la face (35) qui, dans la gorge en Té, reçoit le chant de l'éclisse d'une certaine profondeur (P₂) de préférence au moins égale au recouvrement (R) de l'autre bord de la face (39) de l'éclisse par le côté opposé (42) de la gorge en Té puis,
- au montage, dans la gorge en U (43) ainsi créée, on engage à force une câle allongée (45) d'épaisseur au moins égale à la largeur de la gorge en U (43) par laquelle câle (45) on maintient la dite éclisse par pincement.

4. Moyens en vue de la mise en oeuvre du procédé de fabrication de structures légères selon l'une quelconque des revendications 1 à 3 comprenant des longerons et traverses qui sont avantageusement constitués par des profilés qui, de préférence mais non exclusivement, sont réalisés en matière plastique ou matériau composite, par exemple, obtenus par extrusion, "pultrusion", etc ...
lesquels longerons présentent, ouverte sur leurs faces en vis à vis, une gorge longitudinale (8) qui présente une section en U dont les branches (9, 10) portent avantageusement sur leurs faces en vis à vis des nervures (11, 12)
lesquelles traverses présentent perpendiculairement à leur axe longitudinal (15) et à une certaine distance (D) de la face extrême (16) de la dite traverse des rainures (13, 14) recevant chacune une partie d'une nervure du longeron correspondant,
ces moyens étant caractérisés en ce que: - l'ouverture longitudinale de la gorge que délimitent les nervures a une largeur variable selon qu'on la mesure dans une des zones décalées longitudinalement
- dans les zones (Z₁) où, après montage, les traverses doivent être positionnées et de ce fait dite zone de montage, la dite ouverture a une largeur (L₁) plus égale à l'écartement (E₁) entre les fonds (17, 18) des rainures (13, 14) présentées par les extrémités des traverses (6),
- dans une zone (Z₂) dite de blocage, immédiatement adjacente à l'un des côtés de la zone (Zᵢ) de montage, la dite ouverture a une largeur nettement inférieure à l'écartement (Eᵢ) entre les fonds (17, 18) des rainures (13, 14) précitées de sorte que les limites entre les deux zones constituent des faces (19, 20) de butée pour le chant (21) de la traverse tandis qu'à
- dans la zone Z₃, dite d'engagement, adjacente à l'autre côté de la zone de montage Z₁ qui s'étend sur une longueur supérieure à la largeur de la traverse et qui est elle-même scindée en deux zones dont une zone extrême Z₄, s'étendant sur une longueur au moins égale à la largeur de la traverse et une zone intermédiaire Z₅, l'ouverture de la gorge a une largeur L₄ au moins égale à la hauteur H de l'extrémité de la traverse et dans la zone intermédiaire Z₅ une largeur qui, de préférence, décroit progessivement de la largeur L₄ de l'ouverture dans la zone extrême Z₄ précitée à la largeur L₁ de l'ouverture dans la zone de montage Z₁.

5. Moyens selon la revendication 4 comprenant en outre des éclisses (30) de liaison des longerons caractérisés en ce que la face (31) opposée à celle (32) jouxtant les extrémités des traverses présente une large gorge en Té (33) ouverte latéralement et guidant en translation les extrémités (34) des éclisses (30).

6. Moyens selon la revendication 5 caractérisés en ce que les gorges en Té présentent deux faces en vis à vis (35, 36) dont l'écartement correspond à la hauteur de l'éclisse et des faces (37, 38) destinées à s'appuyer, au moins indirectement, contre la face (39) de l'éclisse opposée à celle (40) en appui contre la nervure ou "âme" (25) du longeron.

7. Moyens selon la revendication 4 ou 5 caractérisés en ce qu'afin de maintenir l'extrémité de l'éclisse en appui contre l'âme du longeron, au moins jusqu'à prise du collage, de préférence, sur au moins l'un (41) des côtés (41, 42) de la gorge en Té, la face (37) destinée à appuyer sur l'un des bords de la face (39) de l'éclisse est écartée de cette face (39) d'une certaine valeur V de manière à réaliser, entre la dite face et le bord de l'éclisse, une gorge longitudinale (43) sensiblement en U ouverte vers la partie axiale du longeron et dont le fond (44) est lui-même écarté de la face (35) qui, dans la gorge en Té, reçoit le chant de l'éclisse d'une certaine profondeur (P₂) de préférence au moins égal au recouvrement (R) de l'autre bord de la face (39) de l'éclisse par le côté opposé (42) de la gorge en Té.

8. Moyens selon l'une quelconque des revendications 4 à 7 qui, en vue de permettre des raccordements dans plus de deux directions, comprennent, en outre, des organes de raccordement 50, caractérisés en ce que les organes de raccordement (50), sur l'une de leurs faces, présentent une gorge (51) en tous points semblable à celle (8) présentée par les longerons afin comme elle de pouvoir recevoir les extrémités des traverses et, sur leur face opposée, présentent des formes aptes à s'engager et à coulisser longitudinalement dans la dite gorge (8) présentée par les longerons pour porter les dites traverses.

9. Moyens selon la revendication 8 caractérisés en ce que l'organe de raccordement (50) présente également des rainures (52, 53) logeant les nervures (11, 12) de la gorge (8) du longeron mais dont l'écartement (E₂) entre les fonds (54, 55) de ces rainures est au plus égal à la largeur (L₂) de l'ouverture de la gorge (8) dans la zone de blocage (22) du longeron.

10. Structure légère pour supporter des éléments longilignes (2) caractérisée en ce qu'elle est constituée des moyens selon l'une quelconque des revendications 4 à 9.

## Patentansprüche

1. Verfahren zur Herstellung einer Leichtbauanordnung zum Tragen von langgestreckten Elementen, beispielsweise Kabel oder Rohrleitungen, wobei die Anordnung durch Verbindung von U-Elementen (3) gebildet wird, die leiterartig jeweils aus zwei nur stellenweise durch Querträger (6) untereinander verbundenen Längsträgern (4, 5) bestehen,
wobei die Längsträger und Querträger vorteilhalfterweise auf Profilen bestehen, die vorzugsweise, wenn auch nicht ausschließlich, aus Kunststoff bestehen und beispielsweise durch Extrudieren, "Pultrusion", und dergleichen hergestellt sind,
während die Längsträger eine auf ihren gegenüberliegenden Flächen offenen Längsauskehlung (8) aufweisen, die einen U-förmigen Querschnitt aufweist, dessen Schenkel (9, 10) vorteilhafterweise auf ihren gegenüberliegenden Flächen Rippen (11, 12) tragen,
und die Querträger senkrecht zu ihrer Längsachse (15) in einem bestimmten Abstand (D) von der äußeren Seite (16) das Querträgers Nuten (13, 14) aufweisen, die jeweils einen Teil einer Rippe des entsprechenden Längsträgers aufnehmen,
dadurch GEKENNZEICHNET, daß
- Längsträger vorgesehen werden, deren Rippen (11, 12) eine Längsöffnung begrenzen, welche eine veränderliche Breite aufweist, je nachdem, wie sie in einer der drei folgenden in Längsrichtung versetzten Zonen gemessen wird:
* in den Zonen (Z₁), in denen nach Montage die Querträger positioniert werden müssen, somit im sogenannten Montagebereich, weist die Öffnung eine Breite (L₁) auf, die höchstens gleich dem Abstand (E₁) zwischen dem Grund (17, 18) der jeweiligen Nuten (13,14) auf den Enden der Querträger (6) ist,
* in einem sogenannten Festellbereich (Z_{Z}), der unmittelbar neben einer der Seiten des Montagebereichs (Zᵢ) liegt, die Öffnung eine Breite aufweist, die deutlich kleiner als der Abstand (E₁) zwischen dem Grund (17, 18) der jeweiligen Nuten (13, 14) ist, so daß die Grenzen zwischen den beiden Bereichen Anschlagflächen (19, 20) für die Kante (21) des Querträgers bilden, und
* im sogenannten Eingriffsbereich (Z₃), der neben der anderen Seite des Montagebereichs (Zᵢ) liegt und sich über eine Länge erstreckt, die größer als die Breite des Querträgers ist und selbst wiederum in zwei Bereiche unterteilt ist, nämlich einen äußeren Bereich (Z₄), der sich über eine Breite mindestens gleich der Länge des Querträgers erstreckt, und einen mittleren Bereich, weist die Öffnung derAuskehlung im äußeren Bereich eine Breite (L₄) auf, die mindestens gleich der Höhe (H) des Endes des Querträgers ist, und im mittleren Bereich (Z5) eine Breite, die vorzugsweise allmählich von der Öffnungsbreite (L₄) im äußeren Bereich (Z₄) auf die Öffnungsbreite (L₁) im Montagebereich (Zᵢ) abnimmt,
- und daß während der Montage durch Verschiebung parallel zur Achse (15) des Querträgers des Ende desselben in die Öffnung im äußeren Bereich (Z₄) eingesetzt wird, worauf der Querträger parallel zur Achse des Längsträgers soweit geschoben wird, bis eine Festklemmung zwischen den Rändern der Öffnung im Montagebereich (Z₁) und ein Anschlagen gegen die hierzu vorgesehen Flächen (19, 20) erreicht ist.

2. Verfahren nach Anspruch 1, dadurch gekennzeichnet, daß
- Längsträger vorgesehen werden, deren den Enden der Querträger benachbarten Fläche (32) gegenüberliegende Fläche (31) eine große seitlich offene T-Auskehlung (33) aufweist, in welcher die Enden (34) von Laschen (30) verschieblich geführt werden, wobei die T-Auskehlung somit insbesondere zwei gegenüberliegende Flächen (35, 36) aufweist, deren Abstand der höhe der Lasche entspricht, sowie Flächen (37, 38), welche zur Abstützung, zumindest indirekt, gegen die der Fläche (40), welche gegen die Außenfläche (31) der Rippe bzw. des "Stegs" (25) des Längsträgers anliegt, gegenüberliegende Fläche (39) der Lasche vorgesehen ist,
- daß die Lasche in die T-Auskehlung eingesetzt und auf der Fläche (31) des Stegs am Längsträger befestigt wird.

3. Verfahren nach Anspruch 1, dadurch gekennzeichnet, daß
- Längsträger vorgesehen werden, die auf mindestens einer, nämlich (41), der beiden Seiten (41,42) derT-Auskehlung eine zurAnlage gegen eine der Kanten der Fläche (39) der Lasche bestimmte Seite (37) aufweisen, die von dieser Fläche (39) um einen bestimmten Betrag V beabstandet ist, um so zwischen der Fläche und dem Rand der Lasche eine Längsauskehlung (43) zu bilden, die im wesentlichen die Form eines zum axialen Abschnitt des Längsträgers hin offenen U aufweist, und deren Grund (44) seinerseits von der Fläche (35) beabstandet ist, welche in der T-Auskehlung die Kante der Lasche mit einer gewissen Tiefe (P₂) aufnimmt, die vorzugsweise zumindest gleich der Überdekkung (R) der anderen Kante der Fläche (39) der Lasche durch die gegenüberliegende Seite (42) derT-Auskehlung ist, woraufhin
- man während der Montage in der auf diese Weise gebildeten U-Auskehlung (43) unter Kraftaufwand einen langgestreckten Keil (45) einsetzt, dessen Dicke zumindest gleich der Breite der U-Auskehlung (43) ist, und mittels dieses Keils (45) die Lasche unter Klemmung festgehalten wird.

4. Mittel zur Durchführung des Verfahrens zur Herstellung von Leichtbauanordnungen nach einem der Ansprüche 1 bis 3, wobei die Längsträger und Querträger vorteilhafterweise aus Profilen bestehen, die vorzugsweise, wenn auch nicht ausschließlich, aus Kunststoff bestehen und beispielsweise durch Extrudieren, "Pultrusion", und dergleichen hergestellt sind,
während die Längsträger eine auf ihren gegenüberliegenden Flächen offene Längsauskehlung (8) aufweisen, die einen U-förmigen Querschnitt aufweist, dessen Schenkel (9, 10) vorteilafterweise auf ihren gegenüberliegenden Flächen Rippen (11, 12) tragen,
und die Querträger senkrecht zu ihrer Längsachse (15) in einem bestimmten Abstand (D) von der äußeren Seite (16) des Querträgers Nuten (13, 14) aufweisen, die jeweils einen Teil einer Rippe des entsprechenden Längsträgers aufnehmen,
dadurch gekennzeichnet, daß
- die Längsöffnung derAuskehlung, die durch die Rippen begrenzt wird, eine veränderliche Breite aufweist, je nachdem, in welchem der in Längsrichtung versetzten drei Bereiche gemessen wird,
- in den Bereichen (Zᵢ), in denen nach Montage die Querträger positioniert werden müssen, also im sogenannten Montagebereich, weist die Öffnung eine Breite (L₁) auf, die höchstens gleich dem Abstand (E₁) zwischen dem Grund (17, 18) der vorgenannten Nuten (13,14) auf den Enden der Querträger ist,
- im sogenannten Festellbereich (Z₂) unmittelbar neben einer der Seiten des Montagebereichs (Zᵢ) weist die Öffnung eine Breite auf, die deutlich kleiner als der Abstand (E₁) zwischen dem Grund (17, 18) der vorgenannten Nuten (13, 14) ist, so daß die Grenzen zwischen den beiden Zonen Anschlagsflächen (19,20) für die Kante (21) des Querträgers bilden, und
* im Bereich (Z₃), dem sogenannten eingriffsbereich neben der anderen Seite des Montagebereichs (Zᵢ), der sich über eine Länge erstreckt, die größer ist als die Breite des Querträgers und selbst wiederum in zwei Bereiche unterteilt ist, nämlich einen äußeren Bereich (Z₄), der sich über eine Breite mindestens gleich der Länge des Querträgers erstreckt, und einen mittleren Bereich (Z5), weist die Öffnung der Auskehlung im äußeren Bereich eine Breite (L₄) auf, die mindestens gleich er Höhe (H) des Endes des Querträgers ist, und im mittleren Bereich (Z5) eine Breite, die vorzugsweise allmählich von der Öffnungsbreite (L₄) im äußeren Bereich (Z₄) auf die Öffnungsbreite (L₁) im Montagebereich (Zᵢ) abnimmt.

5. Mittel nach Anspruch 4, welche zusätzlich Laschen (30) zur Verbindung der Längsträger aufweisen, dadurch gekennzeichnet, daß die der den Enden der Querträger benachbarten Fläche (32) gegenüberliegende Fläche (31) eine große seitlich offene T-Auskehlung (33) aufweist, in welcher die Enden (34) der Laschen (30) verschieblich geführt werden.

6. Mittel nach Anspruch 5, dadurch gekennzeichnet, daß die T-Auskehlung zwei gegenüberliegende Flächen (35, 36) aufweist, deren Abstand der Höhe der Lasche entspricht, sowie Flächen (37, 38), welche zur Abstützung, zumindest indirekt, gegen die der Fläche (40), welche gegen die Außenfläche (31) der Rippe bzw. des "Stegs" (25) des Längsträgers anliegt, gegenüberliegende Fläche (39) der Lasche vorgesehen ist.

7. Mittel nach Anspruch 4 oder 5, dadurch gekennzeichnet, daß zur Sicherung des Endes der Lasche in Anlage gegen den Steg des Längsträgers, zumindest bis zum Festwerden der Verklebung, vorzugsweise auf einer (41) der beiden Seiten (41,42) der T-Auskehlung eine zurAnlage gegen eine der Kanten der Fläche (39) der Lasche bestimmte Seite (37) vorgesehen ist, die von dieser Fläche (39) um einen bestimmten Betrag V beabstandet ist, um so zwischen der Fläche und dem Rand der Lasche eine Längsauskehlung (43) zu bilden, die im wesentlichen die Form eines zum axialen Abschnitt des Längsträgers hin offenen U aufweist, und deren Grund (44) seinerseits von der Fläche (35) beabstandet ist, welche in derT-Auskehlung die Kante der Lasche mit einer gewissen Tiefe (P₂) aufnimmt, die vorzugsweise zumindest gleich der Überdeckung (R) der anderen Kante der Fläche (39) der Lasche durch die gegenüberliegende Seite (42) der T-Auskehlung ist.

8. Mittel nach einem der Ansprüche 4 bis 7, welche zur Ermöglichung von Anschlüssen in mehr als zwei Richtungen darüberhinaus Anschußelemente (50) aufweisen, dadurch gekennzeichnet, daß die Anschlußelemente (50) auf einer ihrer Seiten eine Auskehlung (51) ähnlich der Auskehlung (8) auf den Längsträgern an allen Punkten aufweisen, um wie diese die Enden von Querträgern aufnehmen zu können, welche auf ihrer gegenüberliegenden Seite so geformt sind, daß sie in die Auskehlung (8) auf den Längsträgern in Eingriff gebracht und die dieser gleiten können, um so die Querträger zu tragen.

9. Mittel nach Anspruch 8, dadurch gekennzeichnet, daß die Anschlußelemente (50) gleichermaßen Nuten (52, 53) aufweist, in welche die Rippen (11, 12) der Auskehlung (8) des Längsträgers eingesetzt werden, bei denen jedoch der Abstand (E2) zwischen dem Grund (54, 55) der Nuten höchstens gleich der Breite (L₂) der Öffnung der Auskehlung (8) im Festellbereich (22) des Längsträgers ist.

10. Leichtbauanordnung zum Tragen von langgestreckten Elementen (2), dadurch gekennzeichnet, daß sie aus Mitteln nach einem der Ansprüche 4 bis 9 besteht.

## Claims

1. A process for the production of a light structure for supporting long linear structures such as cables or ducts, the structure being embodied by assembling ladder-like U-section elements each comprising two stringers (4, 5) interconnected solely at intervals by crosspieces (6),
the stringers and crosspieces being ad- vantageusly constituted by sections which are preferably but not exclusively made of plastics, for example, by extrusion, pultrusion, etc.,
the stringers presenting, open on theirfac- ing surfaces, a longitudinal channel (8) which presents a U-section whose arms (9, 10) have, advantageously, ribs (11, 12) on their facing surfaces,
the crosspieces (6) presenting, perpendicularly to their longitudinal axis (15) and at a distance (D) from their end face, grooves (13, 14) each receiving part of a rib of the corresponding stringer,
the process being CHARACTERISED in that:
stringers are provided whose ribs (11, 12) bound a longitudinal opening of a width which varies according as it is measured in any oft he longitudinally offset zones as follows:
in the zones (Z₁) in which the crosspieces (6) are required to be positioned after assembly, therefore called assembly zone, the said opening has a width (L₁) at most equal to the spacing (E₁) between the bases (17, 18) of the grooves (13, 14) presented by the ends of the crosspieces (6),
in a zone (Z₂), called locking zone, immediately adjacent one of the sides of the assembly zone (Z₁ the said opening has a width appreciably less than the spacing (Eᵢ) between the bases (17, 18) of the grooves (13, 14) such that the boundaries between the two zones constitute abutment surfaces (19, 20) for the crosspiece edge (21), and
in the zone (Z₃), called engagement zone, which is adjacent the other side of the assembly zone (Zᵢ), extends over a length greater than the width of the crosspiece (6) and is itself divided into two zones, viz. an end zone (Z₄) of a length at least equal to the width of the crosspiece and an intermediate zone (Z₅), the opening of the channel has in the end zone a width (L₄) at least equal to the height (H) of the crosspiece end and in the intermediate zone (Z₅) a width which pre-
(1) The French text seems to be mutilated about here ferably decreases gradually from the width (L₄) of the opening in the end zone (Z₄) to the width (L₁) of the opening in the assembly zone (Zᵢ), and
at assembly the crosspiece end is engaged in the opening in the end zone (Z₄) by a movement parallel to the crosspiece axis (15), whereafter the crosspiece (6) is pushed parallel to the stringer axis until it is gripped between the edges of the opening in the assembly zone (Zᵢ) and abuts the corresponding abutment surfaces (19, 20).

2. A process according to claim 1, characterised in that:
stringers are provided whose surface (31) remote from the surface (32) adjacent the crosspiece ends is presents a wide laterally open T-channel (33) guiding the movement of the ends (34) of connecting plates (30), the T-channel (33) thus having, more particularly two facing surfaces (35, 36) whose spacing corresponds to the height of the plate (30) and surfaces (37, 38) adapted to bear at least indirectly on the plate surface (39) remote from the plate surface (40) bearing on the outside surface (31) of the stringer rib or "web" (25), and
the plate is engaged in the T-channel (33) and secured to the stringer web surface (31).

3. A process according to claim 2, characterised in that:
stringers are provided which, on at least one (41) of the sides (41, 42) of the T-channel (33), at its⁽¹⁾ surface (37) which is to bear on one of the edges of the plate surface (39) and is so separated therefrom by an amount V as to leave between the surface (37) and the plate edge a substantially U-section longitudinal channel (43) open towards the axial part of the stringer, the base (44) of the channel (43) being distant from the T-channel surface (35) receiving the plate edge by a depth (P₂) which is preferably at least equal to the overlap (R) between the other edge of the plate surface (39) and the opposite end (42) of the T-channel (33), and
an elongate shim (45) whose thickness is at least equal to the width of the resulting U-section channel (42) is forced thereinto to retain the plate by clamping.

4. Means for carrying into effect the process for the production of light structures according to any of claims 1 to 3, the means comprising stringers and crosspieces which are, advantageously, constituted by sections which are preferably but not exclusively made of plastics or a composite, for example, by extrusion, pultrusion etc.,

the stringers presenting, open on theirfac- ing surfaces, a longitudinal channel (8) which presents a U-section whose arms (9, 10) have, advantageously, ribs (11, 12) on their facing surfaces,

the crosspieces presenting, perpendicularly to their longitudinal axis (15) and at a distance (D) from their end face, grooves (13, 14) each receiving part of a rib of a corresponding stringer,

the means being characterised in that:

the longitudinal opening of the channel bounded by the ribs has a width which varies according as it is measured in any of the longitudinally offset zones as follows:
in the zones (Z₁) in which the crosspieces (6) are required to be positioned after assembly, therefore called assembly zone, the said opening has a width (L₁) at most equal to the spacing (E₁) between the bases (17, 18) of the grooves (13, 14) presented by the ends of the crosspieces (6),
in a zone (Z₂) called locking zone immediately adjacent one of the sides of the assembly zone (Z₁ the said opening has a width appreciably less than the spacing (Eᵢ) between the bases (17, 18) of the grooves (13, 14) such so that the boundaries between the two zones constitute abutment surfaces (19, 20) for the crosspiece edge (21), and
in the zone (Z₃), called engagement zone, which is adjacent the other side of the assembly zone (Zᵢ), extends over a length greater than the width of the crosspiece (6) and is itself divided into two zones, viz. an end zone (Z₄) of a length at least equal to the width of the crosspiece and an intermediate zone (Z₅), the opening of the channel has a width (L₄) at least equal to the height (H) of the crosspiece end and in the intermediate zone (Z₅) a width which preferably decreases gradually from the width (L₄) of the opening in the end zone (Z₄, to the width (Lᵢ) of the opening in the assembly zone (Zᵢ).

5. Means according to claim 4 also comprising stringer-connecting plates (30), characterised in that the surface (31) remote from the surface (32) adjacent the crosspiece ends presents a wide laterally open T-channel (33) guiding the movement of the ends (34) of the plates (30).

6. Means according to claim 5, characterised in that the T-channels (33) have two facing surfaces (35, 36) whose spacing corresponds to the height of the plate (30) and surfaces (37, 38) adapted to bear at least indirectly on the plate surface (39) remote from the plate surface (40) bearing on the stringer rib or "web" (25).

7. Means according to claim 4 or 5, characterised in that to retain the plate end in bearing engagement with the stringer web at least until the adhesive fixing sets preferably on at least one (41) of the sides (41, 42) of the T-channel (33), the surface (37) adapted to bear on one of the edges of the plate surface (39) is distant therefrom by an amount V such as to leave between the surface (37) and the plate edge a substantially U-section longitudinal channel (43) open towards the axial part of the stringer, the base (44) of the channel (43) being distant from the T-channel surface (35) receiving the plate edge by a depth (P₂) which is preferably at least equal to the overlap (R) between the other edge of the plate surface (39) and the opposite end (42) of the T-channel (33).

8. Means according to any of claims 4 to 7 which further comprise connecting elements (50) for connections in more than two directions, characterised in that the connecting elements (50) are formed on one of their surfaces with a channel (51) identical to the channel (8) in the stringers in order to be able to receive the crosspiece ends as do the stringers, and on their opposite surface the connecting means (50) have shapes adapted to engage and slide longitudinally in the channel (8) with which the stringers are formed to carry the crosspieces.

9. Means according to claim 8, characterised in that the connecting element (50) is also formed with grooves (52, 53) receiving the ribs (11,12) of the stringer channel (8), the spacing (E₂) between the bases (54, 55) of the grooves (52, 53) being at most equal to the width (L₂) of the opening of the channel (8) in the locking zone (22) of the stringer.

10. A light structure for supporting long linear elements, characterised in that it is constituted by means according to any of claims 4 to 9.
